# EUROPEAN PATENT SPECIFICATION

(11) **EP 3 390 848 B1**
(45) Date of publication and mention of the grant of the patent: **25.03.2020**
(21) Application number: 16819311.8
(22) Date of filing: 16.12.2016
(51) Int. Cl.: F16C 33/24, F16C 41/00, F16C 17/02, F16C 17/12, F16C 33/12

(54) **INTEGRATED FUNCTION OF ENCODER IN PLAIN BEARING**
INTEGRIERTE FUNKTION EINES CODIERERS IN EINEM GLEITLAGER
PALIER LISSE À FONCTION INTÉGRÉE DE CODAGE

(30) Priority: 18.12.2015 US 201562269709 P
(43) Date of publication of application: 24.10.2018
(73) Proprietor: Saint-Gobain Performance Plastics Pampus GmbH, 47877 Willich (DE)
(72) Inventor: MAGNUS, Christian, 45472 Mülheim an der Ruhr (DE)
(74) Representative: Zimmermann & Partner Patentanwälte mbB
(86) International application number: PCT/EP2016/081440
(87) International publication number: WO 2017/103117

(56) References cited:
- WO-A1-2012/080777
- DE-T2- 3 880 639
- DE-U1-202010 014 641
- US-A1- 2013 287 326
- US-A1- 2014 254 967

## Description

### FIELD OF THE DISCLOSURE

The present disclosure relates to bearings and more particularly plain bearings including encoding elements.

### RELATED ART

Bearings typically include two or more components coupled together along a moving interface. Plain bearings, in particular, include sliding layers supported by rigid components. The sliding layers meet at a low friction interface which facilitates relative movement between two or more parts. Certain applications require relative positional awareness of the bearings and components coupled thereto.

Industries utilizing bearings continue to demand improved bearing structures and methods of determining relative position of the bearings for enhanced performance and encoding functionality.

US 2013/0287326 relates to a spherical plain bearing includes an inner ring defining a convex outer surface and an outer ring defining a concave inner surface. The outer ring encircles the inner ring and one or more of the outer surface and the inner surface have a plurality of pockets formed therein. A solid graphite plug is disposed in one or more of the plurality of pockets and slidingly engages the outer surface and/or the inner surface.

US 2014/0254967 relates to a bearing comprising patterned low friction material on an inner component outer surface and on an outer component inner surface.

DE 202010014641 relates to a ball joint unit which enables to connect components so that they can be rotated or pivoted simultaneously in several directions about several axes and thereby transmit electrical power without additional cables.

### BRIEF DESCRIPTION OF THE DRAWINGS

Embodiments are illustrated by way of example and are not intended to be limited in the accompanying figures.
FIG. 1 includes a perspective view of a bearing in accordance with an embodiment.
FIG. 2 includes a cross-sectional elevation view of the bearing as seen along Line A-A.
FIG. 3 includes a top view of the bearing in accordance with an embodiment as seen in a first position.
FIG. 4 includes a top view of the bearing in accordance with an embodiment as seen in a second position.
FIG. 5 includes a cross-sectional elevation view of a component of the bearing in accordance with an embodiment.
FIG. 6 includes a cross-sectional elevation view of a component of another bearing in accordance with an embodiment.
FIG. 7 includes a cross-sectional elevation view of a component of another bearing in accordance with an embodiment.
FIG. 8 includes a top view of a bearing in accordance with an embodiment as seen in a first position.
FIG. 9 includes a top view of the bearing in accordance with an embodiment as seen in a second position.
FIG. 10 includes a cross-sectional elevation view of a bearing in accordance with an embodiment as seen in a first position.
FIG. 11 includes a cross-sectional elevation view of the bearing in accordance with an embodiment as seen in the second position.
FIGS. 12A to 12C include cross-sectional elevation views of bearing cross-sectional profiles in accordance with particular embodiments.

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### SUMMARY OF THE INVENTION

Subject matter of the present invention is a plain bearing as defined in claim 1. Further subject matter is an assembly as defined in claim 13, which assembly comprises a first element and a second element rotatably or linearly coupled to the first element by the plain bearing of the present invention. Further subject matter is a method as defined in claim 14 of detecting rotational movement between two rotatably coupled elements or longitudinal movement between two reciprocating elements. The dependent claims relate to particular embodiments thereof.

### DETAILED DESCRIPTION

The following description in combination with the figures is provided to assist in understanding the teachings disclosed herein. The following discussion will focus on specific implementations and embodiments of the teachings.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the bearing arts.

In accordance with the present invention, a bearing generally includes an inner component rotatably coupled with an outer component. The inner and outer components include an outer and inner surface, respectively, patterned with electrically conductive, low friction material. In an embodiment, the electrically conductive, low friction material can include a plurality of regions spaced apart from one another. A circuit coupled to at least one of the patterned layers may detect relative positions of the inner and outer components with respect to one another when the circuit transitions between open and closed states. That is, the electrically conductive, low friction material and circuit may combine to form a closed circuit when the inner and outer components are in certain aligned, rotational positions and an open circuit when the inner and outer components are in other non-aligned, rotational positions. The detected position of the components may be used for encoding incremental and absolute rotational positions of the inner and outer components with respect to one another.

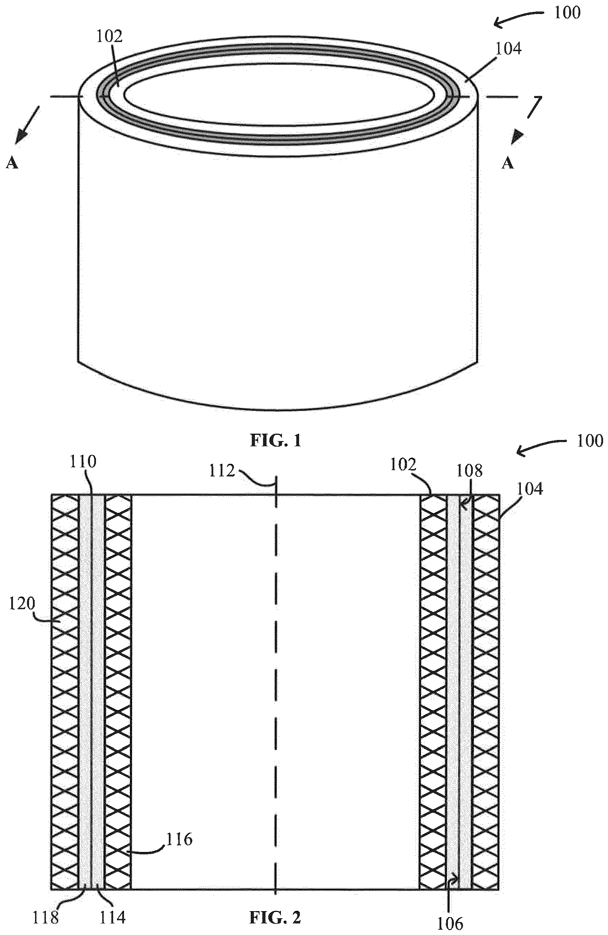

FIGS. 1 and 2 illustrate a bearing 100 in accordance with an embodiment. The bearing 100 includes an inner component 102 and an outer component 104 disposed around the inner component 102. An inner surface 106 of the outer component 104 forms a slip interface 110 with an outer surface 108 of the inner component 102. The inner and outer components 102 and 104 are moveable relative to one another at the slip interface 110. In a particular instance, movement at the slip interface 110 may be in a rotational direction. One or both of the inner and outer components 102 or 104 may rotate relative to the other of the inner or outer components 102 or 104. In another instance, discussed in greater detail below, movement at the slip interface 110 may occur in a linear direction parallel with a central axis 112 of the bearing 100. Linear motion may repeatedly occur by reciprocation.

In a further instance, the bearing includes first and second components which move relative to one another along a slip interface. The bearing described herein can be sized and shaped to fit along the first and second components. In an embodiment, the inner component 102 may be a shaft and the outer component 104 may be a housing. The disclosure is not intended to be limited to bearings including concentric, or generally concentric, components (e.g., an inner component disposed in a housing having a same shape or a same central axis). In a particular embodiment, at least one of the first and second components may include a U-shaped cross-sectional profile, an oblong cross-sectional profile, or a planar surface. The bearing and associated parts therewith are integrated with the first and second components to permit encoding functionality as addressed herein.

In an embodiment, the inner component 102 may include a low friction material 114 coupled to a substrate 116. The low friction material 114 may be attached to the substrate 116 by an adhesive, mechanical deformation, threaded or non-threaded fasteners, another suitable connection method, or any combination thereof. In a particular embodiment, the low friction material 114 may be laminated to the substrate 116 by an adhesive. An exemplary adhesive includes a hot melt adhesive. Further examples of suitable adhesives include fluoropolymers, epoxy resins, polyimide resins, polyether/polyamide copolymers, ethylene vinyl acetates, ethylene tetrafluoroethylene (ETFE), ETFE copolymer, perfluoroalkoxy (PFA), or any combination thereof. Additionally, the adhesive can include at least one functional group selected from -C=O, -C-O-R, -COH, -COOH, -COOR, -CF₂=CF-OR, or any combination thereof, where R is a cyclic or linear organic group containing between 1 and 20 carbon atoms. Additionally, the adhesive can include a copolymer. In an embodiment, the adhesive can have a melting temperature of not greater than 250°C, such as not greater than 220°C. In another embodiment, the adhesive may break down above 200°C, such as above 220°C. In further embodiments, the melting temperature of the adhesive can be higher than 250°C, or higher than 300°C.

The low friction material 114 may be rolled, hot pressed, cold pressed, stamped, or otherwise acted upon to engage with the substrate 116. In an embodiment, attachment between the low friction material 114 and substrate 116 can be performed at temperatures less than the melting temperature of either or both of the low friction material 114 and substrate 116. In another embodiment, at least one of the low friction material 114 or substrate 116 may be heated to a molten, or near molten, state prior to attachment with the other of the low friction material 114 or substrate 116.

In an embodiment, the low friction material 114 includes a patterned layer having relative high points and relative low points. In another embodiment, the low friction material 114 includes a plurality of regions spaced apart from one another. For example, the low friction material 114 may include at least 2 regions, at least 3 regions, at least 4 regions, at least 5 regions, at least 10 regions, or even at least 20 regions. In an embodiment, the low friction material 114 may include no greater than 1000 regions, no greater than 100 regions, or no greater than 50 regions. The regions may be spaced apart from one another, for example by a cut or non-conductive material (described in greater detail below). Adjacent regions can be spaced apart by equal distances or varying distances. In an embodiment, a distance between at least two adjacent regions can differ by at least 10%, at least 25%, at least 50%, at least 100%, or at least 1000%. That is, the difference in distance between adjacent regions can vary widely in accordance with an embodiment.

In a particular instance, regions of the inner component 102 may be spaced apart by a rotational angle, A_{I}, and regions of the outer component 104 may be spaced apart by a rotational angle, A_{O}. In an embodiment, A_{I} may be the same as A_{O}. In another embodiment, A_{I} may be different than A_{O}. At least one of A_{I} and A_{O} may be at least 1°, at least 2°, at least 3°, at least 4°, at least 5°, at least 25°, at least 50°, at least 60°,at least 90°, or at least 180°. At least one of A_{I} and A_{O} is no greater than 359°, or no greater than 270°.

The low friction material 114 can cover no greater than 99.9% of a surface area of the inner or outer surfaces 106 and 108 of the outer or inner components 104 and 102, respectively. In an embodiment, the low friction material 114 can cover no greater than 99% of the surface area, no greater than 95% of the surface area, no greater than 90% of the surface area, no greater than 75% of the surface area, no greater than 50% of the surface area, or no greater than 25% of the surface area. In a further embodiment, the low friction material 114 can cover at least 1% of the surface area, at least 5% of the surface area, or at least 10% of the surface area. In an embodiment, the low friction material 114 may extend entirely across the bearing 100. For example, in an embodiment, the low friction material 114 may extend along an entire axial length of at least one, such as both, of the inner or outer components 102 or 104. In another embodiment, the low friction material can extend along an entire circumferential length of at least one, such as both, of the inner and outer components 102 or 104.

In certain embodiments, the bearing 100 may include a generally cylindrical body. The inner component 102 may be shaped into the generally cylindrical body, for example, using a die or template. Circumferential ends of the generally cylindrical body may be urged around the die or template until the circumferential ends are brought into contact. The circumferential ends may then be attached together, for example, by welding, adhesion, a mechanical lock such as a puzzle lock, another suitable connection method, or any combination thereof.

In an embodiment, the substrate 116 may be shaped into a generally cylindrical body prior to attachment of the low friction material 114. In another embodiment, the low friction material 114 may be shaped into a generally cylindrical body prior to attachment of the substrate 116. In yet a further embodiment, the low friction material 114 and substrate 116 can be jointly shaped from a planar, or generally planar, sheet into a generally cylindrical body. As used herein, a "generally cylindrical body" refers to a shape having a sidewall disposed within a best fit, perfect cylinder, where the sidewall (including planar end sections) occupies at least 90% volume of the perfect cylinder, at least 92% volume of the perfect cylinder, at least 94% volume of the perfect cylinder, at least 95% volume of the perfect cylinder, at least 96% volume of the perfect cylinder, at least 97% volume of the perfect cylinder, at least 98% volume of the perfect cylinder, or at least 99% volume of the perfect cylinder. In a particular embodiment, the bearing 100 may have a cylindrical body where the sidewall occupies at least 99.9% volume of the perfect cylinder, such as 100% volume of the perfect cylinder.

Exemplary substrate materials include metals, alloys, ceramics, polymers, composites, other resilient materials, and combinations thereof. In a particular embodiment, the substrate consists essentially of metal, such as steel. The substrate 116 may be mechanically treated, such as through an abrasive or coining process, or chemically treated, such as through one or more etching or corrosion-resistance coating processes.

The low friction material 114 may include, for example, polytetrafluoroethylene (PTFE), fluorinated ethylene-propylene (FEP), polyvinylidenfluoride (PVDF), ethylene tetrafluoroethylene (ETFE), polychlorotrifluoroethylene (PCTFE), ethylene chlorotrifluoroethylene (ECTFE), perfluoroalkoxy alkane (PFA), polyacetal (POM), polybutylene terephthalate (PBT), polyimide (PI), polyetherimide (PEI), polyetheretherketone (PEEK), polyethylene (PE), ultra high molecular weight polyethylene (UHMWPE), polysulfone, polyamide (PA), polyphenylene oxide (PPE), polyphenylene sulfide (PPS), polyurethane (PU), polyester, nylon, a similar material, or any combination thereof. The low friction material 114 may further include one or more fillers. Exemplary fillers include glass fibers, carbon fibers, silicon, PEEK, aromatic polyester, carbon particles, bronze, fluoropolymers, thermoplastic fillers, aluminum oxide, polyamidimide (PAI), PPS, polyphenylene sulfone (PPSO₂), liquid crystal polymers (LCP), aromatic polyesters, molybdenum disulfide, tungsten disulfide, graphite, grapheme, expanded graphite, boron nitrade, talc, calcium fluoride, or any combination thereof. Additionally, the filler can include alumina, silica, titanium dioxide, calcium fluoride, boron nitride, mica, Wollastonite, silicon carbide, silicon nitride, zirconia, carbon black, pigments, or any combination thereof.

In an embodiment, the low friction material 114 has a static frictional coefficient, µₛ, as measured against polished steel, of no greater than 0.75, no greater than 0.5, no greater than 0.25, no greater than 0.1, or no greater than 0.05. In another embodiment, the low friction material 114 has a static coefficient of friction, µₛ, of at least 0.001. The static frictional coefficient, µₛ, of the low friction material 114 may also be within a range between and including 0.001 and 0.75, in a range between and including 0.01 and 0.2, or more particularly in a range between and including 0.05 and 0.1.

Conductivity of the low friction material 114 permits encoding functionality. In this regard, the low friction material 114 can either include an intrinsically electrically conductive low friction material or one or more fillers including electrically conductive properties. As used herein, "conductive" and "electrically conductive" materials refer to those materials which exhibit an average electrical conductivity, σ_{AVG}, as measured at 20°C along a region of at least 1% of the volume of material being tested (e.g., at least 1% of the volume of low friction material 114), of greater than 0 Siemens per meter (S/m), such as at least 1.0 S/m, at least 1 x 10² S/m, at least 1 x 10³ S/m, at least 1 x 10⁴ S/m, at least 1 x 10⁵ S/m, or at least 1 x 10⁶ S/m.

In a particular embodiment, electrically conductive filler may be homogenously distributed within the low friction material 114. The electrically conductive filler may include one filler material, two filler materials, three filler materials, or any other number of suitable filler materials. In another embodiment, the electrically conductive filler may be heterogeneously distributed, for example, in prearranged patterns or layers within the low friction material 114. For example, the electrically conductive filler may exhibit higher concentrations along exposed surfaces. Alternatively, the electrically conductive filler can form a core of the low friction material 114 with tines extending outward toward exposed surfaces thereof.

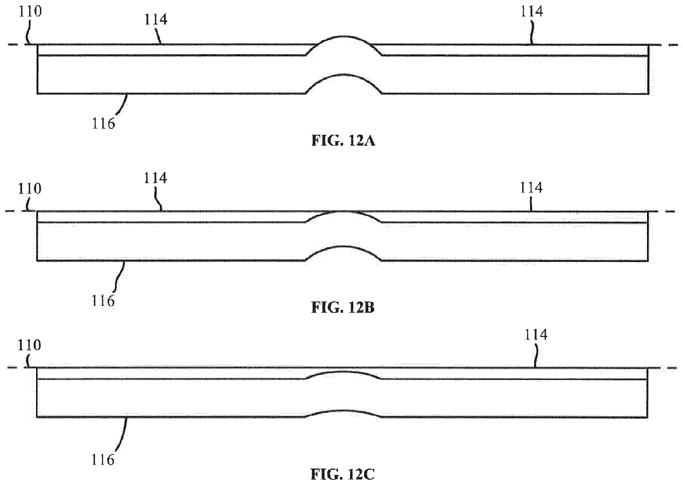

In another aspect, the substrate 116 can be electrically conductive and the low friction material 114 can be electrically resistive. In an embodiment, the substrate 116 may extend radially toward the slip interface 110. The substrate 116 may be radially recessed such that a best fit circle along the slip interface 110 contacts only the low friction material 114 (FIG. 12C). Alternatively, the substrate 116 may lie along the best fit circle (FIG. 12B). In a particular embodiment, the substrate 116 may include a plurality of radially exposed regions spaced apart by regions of low friction material 114 (FIG. 12A).

The outer component 104 may include any combination of features or characteristics previously described for the inner component 102. For example, the outer component 104 may include a low friction material 118 coupled to a substrate 120. The low friction material 118 may include an intrinsically electrically conductive material or one or more electrically conductive fillers. Alternatively, the low friction material 118 may be electrically resistive and interspaced by regions of substrate extending toward the slip interface 110. In a particular instance, the low friction material 118 may be identical, or substantially identical, with the low friction material 114. In another instance, the low friction material 118 may be different than the low friction material 114. In a further embodiment, the substrate 120 may be identical, or substantially identical, with the substrate 116. In yet another embodiment, the substrate 120 may be different than the substrate 116.

One or more lubricants may be disposed along the slip interface 110 to reduce sliding resistance between the inner and outer components 102 and 104. Use of electrically conductive wet lubricants, electrically conductive dry lubricants, or combinations thereof may enhance electrical contact between conductive portion s of the inner and outer components 102 and 104, potentially increasing encoding performance of the bearing 100 in certain systems.

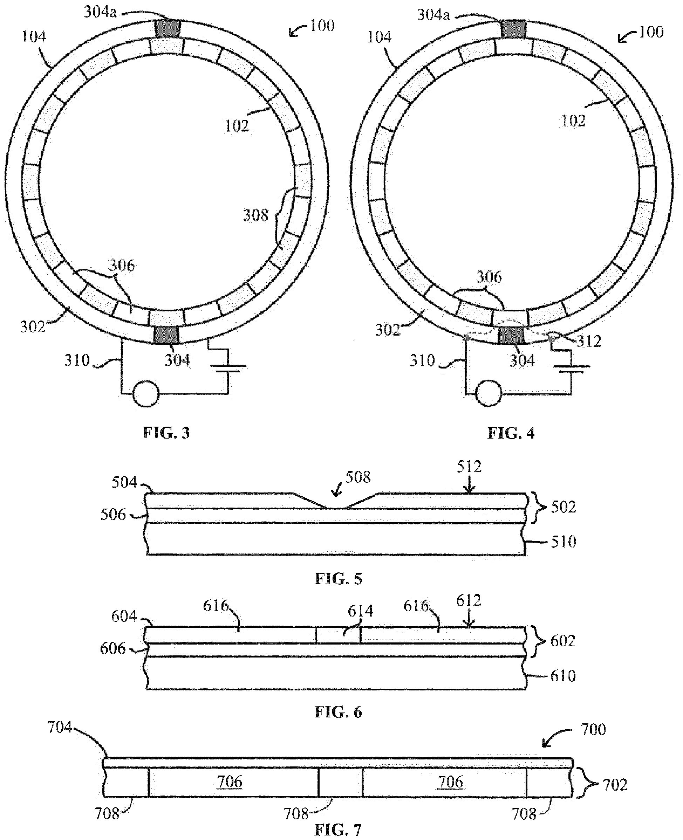

FIG. 3 illustrates low friction materials 114 and 118 independent of substrates 116 and 120. While the bearing 100 may be operable including only low friction materials 114 and 118 without substrates 116 and 120, omission thereof in FIG. 3 is for clarity purposes and should not be constructed as limiting the scope of disclosure. In an embodiment, the low friction material 118 of the outer component 104 includes a conductive region 302 and a non-conductive region 304. In a particular embodiment, the non-conductive region 304 may include a non-conductive space such as a region having lower conductivity than conductive region 302. In another particular embodiment, the non-conductive region 304 may include a gap (e.g., an air gap) such that the conductive region 302 does not extend around the entire circumference of the bearing 100. A second non-conductive region 304a can be positioned along the outer component 104. In an embodiment, the second non-conductive region 304a is opposite the non-conductive region 304. In another embodiment, the second non-conductive region 304a can be positioned at any other position along the outer component 104. The low friction material 114 of the inner component 102 can include conductive regions 306 spaced apart by non-conductive regions 308.

In an embodiment, conductive regions 302 and 306 can include low friction material while non-conductive regions 304 and 308 include substrate. In another embodiment, conductive regions 302 and 306 can include substrate while non-conductive regions 304 and 308 include low friction material. In yet a further embodiment, one of the conductive regions 302 or 306 can include low friction material while one of the non-conductive regions 304 or 308 includes substrate.

A circuit 310 can be in electrical communication with one of the conductive regions 302 or 306. In an embodiment, the circuit 310 can be in electrical communication with the conductive region 302 of the outer component 104 at two or more locations with the non-conductive region 304 disposed between the two or more connection points. In such a manner, the non-conductive region 304 of the outer component 104 disrupts flow of electrical current through the circuit 310 when the non-conductive region 304 of the outer component 104 is aligned with the non-conductive regions 308 of the inner component 102. The circuit 310 can include a power source and a detecting element adapted to detect when the circuit 310 is in the open and closed states. In another embodiment, the circuit 310 can be in electrical communication with one or more conductive regions 306 of the inner component 102 and include a similar arrangement as previous described.

As illustrated in FIG. 3, the circuit is open. That is, the non-conductive region 304 of the outer component 104 is aligned with a non-conductive region 308 of the inner component 102. Thus, flow of electrical current through the circuit 310 is preventing and relative rotational position of the inner component 102 with respect to the outer component 104 is known as it relates to the initial relative positions of the inner and outer components 102 and 104. That is, the relative position of the inner component 102 with respect to the outer component 104 is detectable with respect to a starting position therebetween.

In an embodiment, the circuit 310 (or one or more other detection elements) can further discriminate position of the inner and outer components 102 and 104 relative to one another by sensing changing electrical resistance as caused by changing surface area interface between conductive regions 302 and 306. As the inner and outer components 102 and 104 move relative to one another surface area interface between the conductive regions 302 and 306 changes. That is, the surface area interface between the conductive regions 302 and 306 increases until reaching a maximum area, followed by a decrease in surface area interface. In certain embodiments, this change in surface area interface can be detected through measurements of electrical resistance, electrical conductivity, other suitable methods, or any combination thereof. For example, as electrical resistance decreases, the conductive regions 302 and 306 may more greatly overly one another such that surface area interface therebetween is increased. This increased surface area can lead to greater area for electrical current flow. Using this information, more accurate measure of relative positioning between the inner and outer components 102 and 104 can be calculated.

In a particular instance, the circuit 310 can be coupled to the conductive region 302 along an axial end of the bearing 100. For example, conductive wires may extend to axially exposed surfaces of the conductive region 302. In another instance, the circuit 310 can be coupled to the conductive region 302 through the substrate 116. A conductive wire may extend through the substrate 116, surrounded by an optional insulating coating or layer. In a further instance, integral connection protocol may exist, creating ports or other external access to the conductive region 302. Connection protocol between circuit 310 and conductive region 302 is not intended to be limited as any combination of these connection methods or alternate connection method may be utilized as long as the circuit 310 can sense movement between the inner and outer components 102 and 104.

In an embodiment, the non-conductive region 304 may have a circumferential width less than the circumferential width of the non-conductive region 308, thus preventing a closed circuit 310 upon proper rotational alignment. For example, the circumferential width of the non-conductive region 304 may be less than 99% the circumferential width of the non-conductive region 308, less than 95% the circumferential width of the non-conductive region 308, less than 90% the circumferential width of the non-conductive region 308, less than 80% the circumferential width of the non-conductive region 308, less than 70% the circumferential width of the non-conductive region 308, less than 60% the circumferential width of the non-conductive region 308, less than 50% the circumferential width of the non-conductive region 308, or less than 25% the circumferential width of the non-conductive region 308. In an embodiment, the circumferential width of the non-conductive region 304 may be at least 1% the circumferential width of the non-conductive region 308. As described below, this may permit electrical current to flow through the inner and outer components 102 and 104 upon proper rotational alignment.

In a further embodiment, the non-conductive region 304 may have a circumferential width less than the circumferential width of the conductive regions 306. For example, the circumferential width of the conductive regions 306may be less than 99% the circumferential width of the conductive regions 306, less than 95% the circumferential width of the conductive regions 306, less than 90% the circumferential width of the conductive regions 306, less than 80% the circumferential width of the conductive regions 306, less than 70% the circumferential width of the conductive regions 306, less than 60% the circumferential width of the conductive regions 306, less than 50% the circumferential width of the conductive regions 306, or less than 25% the circumferential width of the conductive regions 306. In an embodiment, the circumferential width of the non-conductive region 304 may be at least 1% the circumferential width of the conductive regions 306.

The number of conductive regions 306 and non-conductive regions 308 can be different than as illustrated in FIG. 3. For example, in an embodiment, the inner component 102 may include one conductive region 306. In other embodiments, the inner component 102 may include at least two conductive regions, at least three conductive regions, at least four conductive regions, at least five conductive regions, at least ten conductive regions, at least twenty conductive regions, at least thirty conductive regions, at least forty conductive regions, or at least fifty conductive regions. In yet a further embodiment, the inner component 102 may include no more than 10,000 conductive regions, no more than 1,000 conductive regions, or no more than 100 conductive regions. The conductive regions 306 may be spaced apart from one another. In such a manner, each conductive region 306 may be electrically isolated from adjacent, or nearby, conductive regions 306. In an embodiment, adjacent conductive regions can be spaced apart by at least 0.01% of a circumference of the bearing 100, at least 0.1% of the circumference, at least 1% of the circumference, at least 5% of the circumference, at least 10% of the circumference, or at least 25% of the circumference. In a further embodiment, adjacent conductive regions are spaced apart by no greater than 99% of the circumference of the bearing 100, no greater than 75% of the circumference, or no greater than 50% of the circumference. While the non-conductive regions 308 (i.e., the distance between adjacent conductive regions 306) may all have the same relative size as one another, in certain embodiments, the size of at least two of the non-conductive regions 308 may be different from one another.

As the inner or outer component 102 or 104 is rotated with respect to the other, the non-conductive region 304 of the outer component may align with a conductive region 306, between two adjacent non-conductive regions 308. In this case, as illustrated, for example, in FIG. 4, the circuit 310 may be closed. That is, the conductive region 306 is in electrical communication with the conductive region 302 on both sides of the non-conductive region 304, thus permitting electrical flow through the circuit 310 along a continuous path 312. As the bearing 100 continues to rotate (i.e., one of the inner and outer components 102 and 104 is rotated with respect to the other), the circuit 310 again breaks (FIG. 3), indicating a relative rotational movement of the inner and outer components 102 and 104 with respect to one another.

Although the above description discusses connection of the circuit 310 to the outer component 104, it is possible to invert the described bearing 100 such that the circuit 310 is instead connected to the inner component 102. Similarly, the low friction materials 114 and 118 can be switched such that the inner component 102 includes only one non-conductive region 304 and one second non-conductive region 304a while the outer component 104 includes a plurality of non-conductive regions 308.

Referring now to FIG. 5, an exemplary cross-sectional elevation view of the inner or outer component 102 or 104 is illustrated, including low friction material 502 coupled to a substrate 510. As illustrated, the low friction material 502 can include a low friction layer 504 coupled to an intermediary layer 506. The intermediary layer 506 may attach to the substrate 510, linking the low friction layer 504 thereto.

The intermediary layer 506 may include a polymer, metal, alloy, ceramic, another similar material, or a combination thereof. In a particular embodiment, the intermediary layer 506 may include an electrically resistive material, insulating the low friction layer 504 from the substrate 510. Exemplary materials include ETFE, PTFE, FEP, PVDF, PCTFE, PI, PEI, PPE, UHMWPE, modified compositions including the listed polymers, other suitable materials, and combinations thereof. The intermediary layer 506 may be coupled to one or both of the substrate 510 and low friction layer 504 by an adhesive, mechanical deformation, threaded or non-threaded fasteners, another suitable method, or a combination thereof.

In an embodiment, the intermediary layer 506 may include a plurality of layers. All of the plurality of layers can be disposed within a region between the substrate 510 and the low friction layer 504. In a particular instance, the intermediary layer 506 may include at least two layers, at least three layers, at least four layers, at least five layers, or at least ten layers. In a further instance, the intermediary layer 506 may include less than 100 layers, less than 50 layers, or less than 25 layers. The intermediary layers 506 may be deposited successively or simultaneously with the low friction layer 504 relative to the substrate 510.

In a particular instance, the intermediary layer 506 may be patterned with one or more openings, ridges, bumps, depressions, similar feature, or combination thereof to provide a desired electrical interaction between the substrate 510 and the low friction layer 504, or between the inner and outer components 102 and 104.

In an embodiment, the substrate 510 may be modified to have an electrically insulating property using a treatment process such as a phosphatizing solution. The substrate 510 may be first surface treated with a phosphatizing bath including a reactive aqueous solution or dispersion and a ligand-forming organic polymer. Metal phosphate or metal acid phosphate may react with the substrate 510 resulting in a protective reaction coating therealong. The substrate 510 is then rinsed and may be suitable for coupling with the low friction material 502. In other embodiments, it may be possible to otherwise treat the substrate 510 using a reactive process to form an insulating barrier along the exposed surfaces of the substrate 510. The low friction layer 504 may then be attached directly to the substrate 510.

A cut 508 in the low friction layer 504 is one possible method by which to form non-conductive regions along the low friction material 502. As described above, non-conductive regions interposed between adjacent regions of low friction material 502 permit encoding functionality. Disruption of electrical conductivity along path 312 (FIG. 4) allows detection of rotational movement. Cut 508 may be made in at least one layer of the low friction material 502 (such as the low friction layer 504) of at least one of the inner and outer components 102 and 104 such that, upon alignment of the cut 508 with another non-conductive region (e.g., another cut), the circuit is open. As illustrated, the cut 508 can have a tapering cross-sectional profile. The taper may include tapered surfaces lying along straight lines. Alternatively, the taper may include tapered surfaces lying along arcuate lines. In yet a further embodiment, the taper may include tapered surfaces lying along a line with both an arcuate segment and a straight segment.

In an embodiment, the cut 508 may extend into the low friction material 502 a depth, as measured from an exposed surface 512, equal to a thickness of the low friction layer 504. In another embodiment, the cut 508 may extend into the low friction material 502 a depth, D_{C}, less than a thickness, T_{LFL}, of the low friction layer 504. For example, D_{C} can be less than 0.99 T_{LFL}, less than 0.95 T_{LFL}, less than 0.9 T_{LFL}, less than 0.8 T_{LFL}, less than 0.7 T_{LFL}, less than 0.6 T_{LFL}, or less than 0.5 T_{LFL}. In a particular instance, the cut 508 may extend a depth, D_{C}, of at least 0.01 T_{LFL}, at least 0.05 T_{LFL}, or at least 0.1 T_{LFL}. In yet another embodiment, the cut 508 may extend through the low friction layer 504 and at least a portion of the intermediary layer 506.

In an embodiment, the cut 508 may extend at least partially along a line parallel with the central axis 112 of the bearing 100. In another embodiment, at least a portion of the cut 508 can lie along a straight line which is angularly offset from the central axis 112. In a further embodiment, at least a portion of the cut 508 can lie along a generally spiraled (e.g., helical) line. In yet a further embodiment, the cut 508 can include straight segments, arcuate segments, diagonal segments, or combinations thereof. Multiple cuts 508 formed in the bearing 100 can each have the same shape, size, depth, other similar characteristic as one another, or a combination thereof. The cuts 508 may be staggered evenly around the circumference of the bearing 100 or unevenly distributed such that certain adjacent cuts are closer together than other adjacent cuts. Irregular spaced cuts may permit greater encoding functionality, potentially permitting absolute encoding functioning with inclusion of a single circuit.

Referring to FIG. 6, in another embodiment, the inner or outer components 102 or 104 may include a low friction material 602 including a low friction layer 604 and an optional intermediary layer 606 disposed on a substrate 610. Instead of forming non-conductive regions using cut 508 as described above, the low friction layer 614 may instead include a non-conductive region 614 positioned between conductive regions 616 of the low friction layer 604. The non-conductive region 614 may extend from an exposed surface 612 a depth less than, equal to, or greater than a thickness of the low friction layer 604. In an embodiment, the non-conductive region 614 may include a non-conductive material (e.g., a resistive material). In another embodiment, the non-conductive region 614 may include a material having an electrical conductivity that is less than the electrical conductivity of the conduction regions of the low friction layer 604. That is, absolute resistance of the non-conductive region 614 is not required in all embodiments.

FIG. 7 illustrates another embodiment for the inner or outer component 102 or 104, including a substrate 702 and a low friction material 704. The substrate 702 can include electrically conductive regions 706 (e.g., electrodes) spaced apart from one another by non-conductive regions 708. The low friction material 704 is adapted to contact a low friction material of the second component (not illustrated). As the conductive regions 706 near conductive regions of the second component, the conductive regions 706 act similar to capacitors, allowing built up electrical current to flow through the circuit (not illustrated). Thus, direct contact between the electrically conductive elements of the first and second components is not necessary. In a particular embodiment, the low friction material 704 can act as a dielectric layer, isolating the conductive regions 706 from direct contact with conductive regions of the second component. While the above description is made with specific reference to components on the first and second components 102 and 104 of the bearing, it is possible to switch the described components between the first and second components 102 and 104 such that the electrically conductive regions 706 are only on the second component 104 or on both the first and second components 102 and 104. Additionally, it is possible to combine the structures illustrated in FIGS. 5-7 in any combination, including rotating, alternating, or adjusting the arrangement of conductive and non-conductive regions.

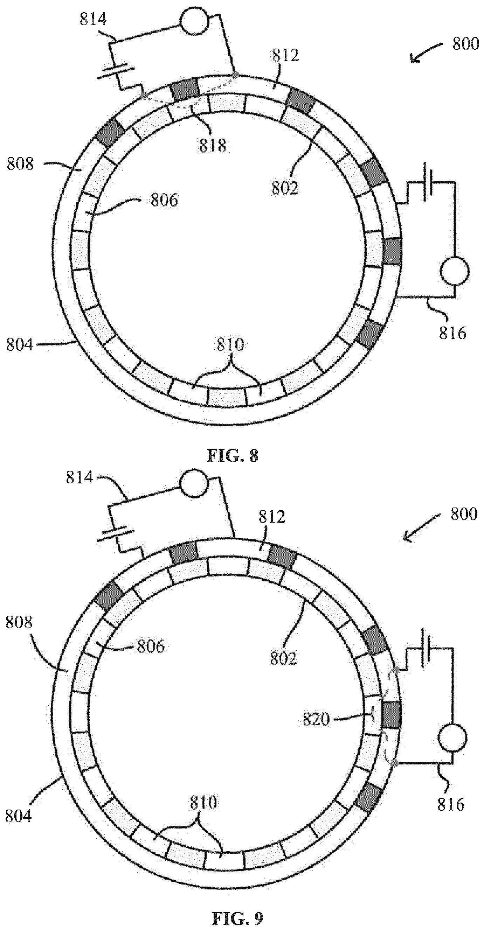

FIGS. 8 and 9 illustrate a bearing 800 having a different arrangement than bearing 100. Whereas previously described bearing 100 may be suitable for incremental rotational encoding, bearing 800 may be suitable for both incremental and absolute rotational encoding functionality. Similar to bearing 100, bearing 800 may include an inner component 802 and an outer component 804. As illustrated, the inner and outer components 802 and 804 include low friction materials 806 and 808, respectively. The disclosure is not intended to be limited to the arrangement as illustrated. Specifically, the low friction materials 806 and 808 may be used in conjunction with one or more substrates or intermediary layers as previously described.

With proper arrangement of conductive elements, non-conductive elements, and circuits, n' absolute positions of the bearing 100 can be detected, where n is the number of different states of each circuit and i is the number of circuits.

FIG. 8 illustrates the bearing 800 in a first rotational position. The conductive regions 810 of the inner component 802 are aligned with conductive regions 812 of the outer component 804 at a first circuit 814. Thus, electrical current can flow along path 818 to close the first circuit 814. The conductive regions 810, however, are misaligned with conductive regions 812 at a second circuit 816. The combination of circuit logic (i.e., when each circuit 814 and 816 is open and closed) may be used for encoding functionality of the bearing 800. FIG. 9 illustrates the bearing 800 in a second rotational position. Unlike the first position, in the second position the conductive regions 810 are not aligned with conductive regions 812 at the first circuit 814, but instead are aligned at the second circuit 816. Thus, electrical current can flow along path 820 to close the second circuit 816.

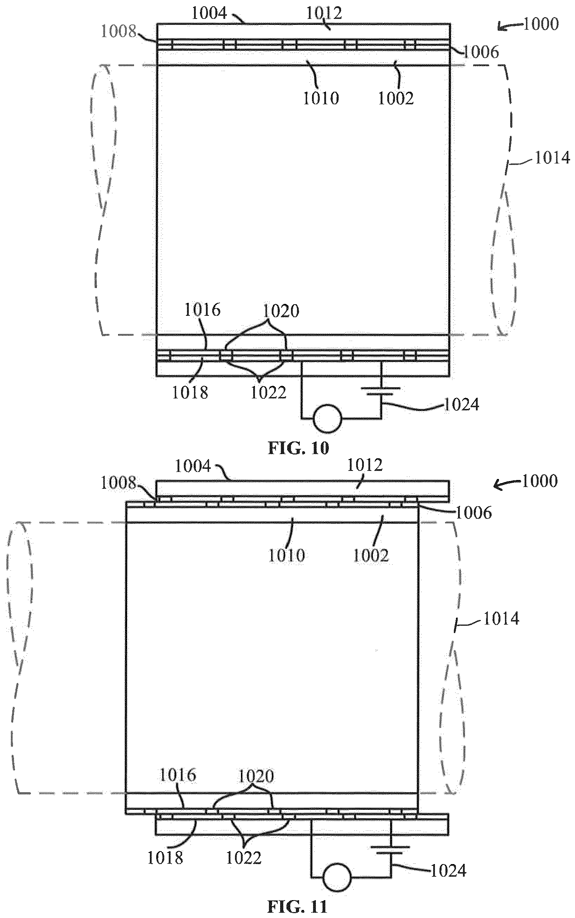

Encoding bearing structures in accordance with embodiments described herein may also be utilized for reciprocating (longitudinal) movement. Referring to FIGS. 10 and 11, a bearing 1000 may include an inner component 1002 disposed within an outer component 1004. The inner and outer components 1002 and 1004 may each include a low friction material 1006 and 1008, respectively, coupled to a substrate 1010 and 1012, respectively. As previously described, the low friction material 1006 and 1008 may include an intrinsically electrically conductive material or a material having one or more electrically conductive fillers. The low friction materials 1006 and 1008 may include conductive regions 1016 and 1018, respectively, and non-conductive regions 1020 and 1022, respectively.

As illustrated in FIG. 10, the bearing 1000 is at a first longitudinal position. That is, an inner member 1014, such as a shaft, rod, or pin, disposed in the bearing 1000 is at a first longitudinal position. In the first position, adjacent conductive regions 1018 are electrically isolated from one another, rendering circuit 1024 electrically open. FIG. 11 illustrates the bearing 1000 in a second longitudinal position. As illustrated, adjacent conductive regions 1018 are electrically connected together by conductive regions 1016, thus rendering circuit 1024 electrically closed. In such a manner, the relative longitudinal position of the inner member 1014 can be detected for encoding functionality.

Note that not all of the activities described above in the general description or the examples are required, that a portion of a specific activity may not be required, and that one or more further activities may be performed in addition to those described. Still further, the order in which activities are listed is not necessarily the order in which they are performed.

Certain features that are, for clarity, described herein in the context of separate embodiments, may also be provided in combination in a single embodiment. Conversely, various features that are, for brevity, described in the context of a single embodiment, may also be provided separately or in any subcombination. Further, reference to values stated in ranges includes each and every value within that range.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A plain bearing (100) comprising:
an inner component (102) having an outer surface (108); and
an outer component (104) disposed around the inner component (102) and having an inner surface (106),
wherein the inner and outer surfaces meet at a slip interface (110), and wherein the inner and outer surfaces (106, 108) each comprise a patterned electrically conductive, low friction material (114).

2. The plain bearing (100) of claim 1, wherein:
the outer surface (108) of the inner component (102) includes a patterned layer comprising the electrically conductive, low friction material (114);
the inner surface (106) of the outer component (104) includes a patterned layer comprising the electrically conductive, low friction material (114); and
a circuit (310) coupled to at least one of the patterned layers,
wherein:
the inner and outer components (102, 104) are moveable with respect to one another,
the outer surface (108) of the inner component (102) and the inner surface (106) of the outer component (104) are in contact with each other, and
the circuit is adapted to detect a relative position of the inner component (102) with respect to the outer component (104).

3. The plain bearing (100) of claim 1, further comprising a circuit (310).

4. The plain bearing (100) of claim 2 or 3, wherein the circuit (310) comprises:
a power source; and
a detecting element adapted to detect when the circuit (310) is in an open state and a closed state.

5. The plain bearing (100) of any one of claims 2 to 4, further comprising:
a second circuit (816) coupled to at least one of the inner and outer components.

6. The plain bearing (100) of any one of the preceding claims, wherein the electrically conductive, low friction material (114) covers no greater than 99.9% of a surface area of the inner or outer surfaces (106, 108).

7. The plain bearing (100) of any one of the preceding claims, wherein the electrically conductive, low friction material (114) of at least one of the inner and outer components (102, 104) comprises a plurality of regions.

8. The plain bearing (100) of claim 7, wherein at least one of the plurality of regions extends along an entire axial or circumferential length of the inner or outer component (102, 104).

9. The plain bearing (100) of claim 7 or 8, wherein the plurality of regions comprises at least 2 regions.

10. The plain bearing (100) of claim 7 to 9, wherein the regions are spaced apart from one another by a non-conductive space.

11. The plain bearing (100) of any one of the preceding claims, wherein the electrically conductive, low friction material (114) of at least one of the inner and outer components (102, 104) is coupled to a substrate (116).

12. The plain bearing (100) of any one of the preceding claims, wherein the electrically conductive, low friction material (114) comprises a fluoropolymer.

13. An assembly comprising:
a first element; and
a second element rotatably or linearly coupled to the first element by a plain bearing (100) or component according to any one of the preceding claims.

14. A method of detecting rotational movement between two rotatably coupled elements or longitudinal movement between two reciprocating elements comprising:
providing an assembly including a first element and a second element coupled to the first element by a plain bearing interface (110) comprising an inner surface (106) and an outer surface (108), wherein the inner and outer surfaces (106, 108) each comprise a patterned electrically conductive, low friction material (114) and at least one of the inner and outer surfaces (106, 108) comprises at least one circuit (310); and
detecting when at least one circuit (310) is in the closed and open positions as the first and second surfaces (106, 108) are translated with respect to one another.

15. The method of claim 14, further comprising:
analyzing the detected circuit information to determine a position of the first element with respect to the second element.

## Patentansprüche

1. Gleitlager (100), umfassend:
eine innere Komponente (102), die eine Außenfläche (108) aufweist; und
eine äußere Komponente (104), die um die innere Komponente (102) herum angeordnet ist und eine Innenfläche (106) aufweist,
wobei sich die Innen- und Außenfläche an einer Gleitgrenzfläche (110) treffen und
wobei die Innen- und Außenfläche (106, 108) jeweils ein gemustertes elektrisch leitfähiges reibungsarmes Material (114) aufweisen.

2. Gleitlager (100) nach Anspruch 1, wobei:
die Außenfläche (108) der inneren Komponente (102) eine gemusterte Schicht beinhaltet, die das elektrisch leitfähige reibungsarme Material (114) beinhaltet;
die Innenfläche (106) der äußeren Komponente (104) eine gemusterte Schicht beinhaltet, die das elektrisch leitfähige Material (114) beinhaltet; und
ein Stromkreis (310), der mit mindestens einer der gemusterten Schichten verbunden ist,
wobei:
die innere und äußere Komponente (102, 104) im Verhältnis zueinander beweglich sind,
die Außenfläche (108) der inneren Komponente (102) und die Innenfläche (106) der äußeren Komponente (104) in Kontakt miteinander stehen, und
der Stromkreis ausgelegt ist, um eine relative Position der inneren Komponente (102) in Bezug auf die äußere Komponente (104) zu erkennen.

3. Gleitlager (100) nach Anspruch 1, ferner umfassend einen Stromkreis (310).

4. Gleitlager (100) nach Anspruch 2 oder 3, wobei der Stromkreis (310) umfasst:
eine Stromquelle; und
ein Erkennungselement, das ausgelegt ist, um zu erkennen, wann sich der Stromkreis (310) in einem offenen Zustand und einem geschlossenen Zustand befindet.

5. Gleitlager (100) nach einem der Ansprüche 2 bis 4, ferner umfassend:
einen zweiten Stromkreis (816), der mit der inneren und/oder äußeren Komponente verbunden ist.

6. Gleitlager (100) nach einem der vorhergehenden Ansprüche, wobei das elektrisch leitfähige reibungsarme Material (114) nicht mehr als 99,9 % einen Oberflächenbereich der Innen oder Außenfläche (106, 108) bedeckt.

7. Gleitlager (100) nach einem der vorhergehenden Ansprüche, wobei das elektrisch leitfähige reibungsarme Material (114) mindestens einer der inneren und äußeren Komponente (102, 104) eine Vielzahl von Regionen umfasst.

8. Gleitlager (100) nach Anspruch 7, wobei sich mindestens eine der Vielzahl von Regionen entlang einer gesamten Axial- oder Umfangslänge der inneren oder äußeren Komponente (102, 104) erstreckt.

9. Gleitlager (100) nach Anspruch 7 oder 8, wobei die Vielzahl von Regionen mindestens 2 Regionen umfasst.

10. Gleitlager (100) nach Anspruch 7 bis 9, wobei die Regionen durch einen nichtleitfähigen Raum voneinander entfernt angeordnet sind.

11. Gleitlager (100) nach einem der vorhergehenden Ansprüche, wobei das elektrisch leitfähige reibungsarme (114) mindestens einer der inneren und äußeren Komponente (102, 104) mit einem Substrat (116) verbunden ist.

12. Gleitlager (100) nach einem der vorhergehenden Ansprüche, wobei das elektrisch leitfähige reibungsarme Material (114) ein Fluorpolymer umfasst.

13. Baugruppe, umfassend:
ein erstes Element; und
ein zweites Element, das durch ein Gleitlager (100) oder eine Komponente nach einem der vorhergehenden Ansprüche drehbar oder linear mit dem ersten Element verbunden ist.

14. Verfahren zum Erkennen einer Drehbewegung zwischen zwei drehbar verbundenen Elementen oder einer Längsbewegung zwischen zwei sich hin- und her bewegenden Elementen, umfassend:
Bereitstellen einer Baugruppe, die ein erstes Element und ein zweites Element beinhaltet, die über eine Gleitlagergrenzfläche (110), die eine Innenfläche (106) und einer Außenfläche (108) umfasst, mit dem ersten Element verbunden sind, wobei die Innen- und Außenfläche (106, 108) jeweils ein gemustertes elektrisch leitfähiges reibungsarmes Material (114) umfasst und mindestens eine der Innen- und Außenfläche (106, 108) mindestens einen Stromkreis (310) aufweist; und
Erkennen, wann sich mindestens ein Stromkreis (310) im geschlossenen und offenen Zustand befindet, wenn die erste und die zweite Fläche (106, 108) in Bezug zueinander verschoben werden.

15. Verfahren nach Anspruch 14, ferner umfassend:
Analysieren der erkannten Stromkreisinformationen, um eine Position des ersten Elements in Bezug auf das zweite Element zu ermitteln.

## Revendications

1. Palier lisse (100) comprenant :
un composant interne (102) ayant une surface externe (108) ; et
un composant externe (104) disposé autour du composant interne (102) et ayant une surface interne (106),
dans lequel les surfaces interne et externe se rencontrent au niveau d'une interface de glissement (110), et dans lequel les surfaces interne et externe (106, 108) comprennent chacune un matériau à faible friction électriquement conducteur, à motifs (114).

2. Palier lisse (100) selon la revendication 1, dans lequel :
la surface externe (108) du composant interne (102) comprend une couche à motifs comprenant le matériau à faible friction électriquement conducteur (114) ;
la surface interne (106) du composant externe (104) comprend une couche à motifs comprenant le matériau à faible friction électriquement conducteur (114) ; et
un circuit (310) couplé à au moins l'une des couches à motifs,
dans lequel :
les composants interne et externe (102, 104) sont mobiles l'un par rapport à l'autre,
la surface externe (108) du composant interne (102) et la surface interne (106) du composant externe (104) sont en contact l'une avec l'autre, et
le circuit est adapté pour détecter une position relative du composant interne (102) par rapport au composant externe (104).

3. Palier lisse (100) selon la revendication 1, comprenant en outre un circuit (310).

4. Palier lisse (100) selon la revendication 2 ou 3, dans lequel le circuit (310) comprend :
une source d'alimentation ; et
un élément de détection adapté pour détecter lorsque le circuit (310) est dans un état ouvert et un état fermé.

5. Palier lisse (100) selon l'une quelconque des revendications 2 à 4, comprenant en outre :
un second circuit (816) couplé à au moins l'un des composants interne et externe.

6. Palier lisse (100) selon l'une quelconque des revendications précédentes, dans lequel le matériau à faible friction électriquement conducteur (114) ne couvre pas plus de 99,9 % d'une surface des surfaces interne ou externe (106, 108).

7. Palier lisse (100) selon l'une quelconque des revendications précédentes, dans lequel le matériau à faible friction électriquement conducteur (114) d'au moins l'un des composants interne et externe (102, 104) comprend une pluralité de régions.

8. Palier lisse (100) selon la revendication 7, dans lequel au moins l'une de la pluralité de régions s'étend sur toute une longueur axiale ou circonférentielle du composant interne ou externe (102, 104).

9. Palier lisse (100) selon la revendication 7 ou 8, dans lequel la pluralité de régions comprend au moins 2 régions.

10. Palier lisse (100) selon la revendication 7 à 9, dans lequel les régions sont espacées les unes des autres par un espace non conducteur.

11. Palier lisse (100) selon l'une quelconque des revendications précédentes, dans lequel le matériau à faible friction électriquement conducteur (114) d'au moins l'un des composants interne et externe (102, 104) est couplé à un substrat (116).

12. Palier lisse (100) selon l'une quelconque des revendications précédentes, dans lequel le matériau à faible friction électriquement conducteur (114) comprend un polymère fluoré.

13. Assemblage comprenant :
un premier élément ; et
un second élément couplé de manière rotative ou linéaire au premier élément par un palier lisse (100) ou un composant selon l'une quelconque des revendications précédentes.

14. Procédé de détection d'un mouvement de rotation entre deux éléments couplés de manière rotative ou d'un mouvement longitudinal entre deux éléments à mouvement alternatif, comprenant :
la fourniture d'un ensemble comprenant un premier élément et un second élément couplé au premier élément par une interface de palier lisse (110) comprenant une surface interne (106) et une surface externe (108), les surfaces interne et externe (106, 108) comprenant chacune un matériau à faible frottement électriquement conducteur, à motif (114) et au moins l'une des surfaces interne et externe (106, 108) comprenant au moins un circuit (310) ; et
la détection lorsqu'au moins un circuit (310) est en positions fermée et ouverte lorsque les première et seconde surfaces (106, 108) sont translatées l'une par rapport à l'autre.

15. Procédé selon la revendication 14, comprenant en outre :
l'analyse des informations de circuit détectées pour déterminer une position du premier élément par rapport au second élément.
